# EUROPEAN PATENT APPLICATION

(11) **EP 1 195 551 A2**
(43) Date of publication of application: **10.04.2002**
(21) Application number: 01660183.3
(22) Date of filing: 03.10.2001
(51) Int. Cl.: F21S 8/00, F21V 17/16, F21V 3/00

(54) **Lighting fixture arrangement**

(30) Priority: 04.10.2000 FI 20002186
(71) Applicant: TEKNOWARE OY, 15200 Lahti (FI)
(72) Inventor: Kuisma, Jouko, 15200 Lahti (FI)
(74) Representative: Savolainen, Seppo Kalevi

(57) **Abstract**

The invention relates to a lighting fixture arrangement comprising a housing (1), a light source (3), a light-permeable shield part (4) scattering light and an at least mainly opaque part (5) placed at the light source (3) in the shield part (4).

## Description

### BACKGROUND OF THE INVENTION

The invention relates to a lighting fixture arrangement comprising a housing, a light source and a light-permeable shield part scattering light. The lighting fixture arrangement according to the invention is typically used in the interior lighting in vehicles used for public transportation, but it may also be used elsewhere, where similar lighting is desired.

In general, lighting fixture arrangements employ light sources that provide light generally at an angle of approximately 300 to 360 degrees. On this account, a reflector part is also typically arranged behind the light source and a grating part reducing the reflection in front of the light source, or alternatively a dustproof structure is provided with a glass or plastic-structured cover.

It becomes difficult to adequately optimise the reduction of the reflection in relation to the lighting, especially when the cover described above functions as a shield part. If too much reflection is removed, for example using a dim cover, then the desired lighting may be inadequate. A clear cover may result in a lighting that strains the eyes excessively or that is otherwise uncomfortable or incorrectly directed.

### BRIEF DESCRIPTION OF THE INVENTION

It is an object of the invention to solve the above problems. This object is achieved with the lighting fixture arrangement of the invention, characterized by also comprising an at least mainly opaque part placed at the light source in the shield part.

The invention is based on the idea to use indirect lighting in the lighting fixture arrangement by integrating a part that at least essentially removes the direct reflection of the light to the shield part.

Preferably the mainly opaque part is detachably fastened to the shield part, most preferably onto the outer surface of the shield part. This can be implemented using grooves in the shield part or claw-like fasteners. Furthermore, when the shield part is made of flexible material, the opaque part can be fastened to the shield part by bending the shield part and by snapping the opaque part into the fasteners thereof.

The luminosity of the lighting fixture arrangement can be maximized regardless of the opaque part, when the surface of said part approaching the light source reflects light.

If the lighting fixture arrangement including the shield parts is an elongated structure, which is the most typical implementation of said lighting fixture arrangement, then the opaque part is preferably fastened into the middle of the shield part, whereby longitudinal outlet openings are left for the light at the sides of the shield part.

### BRIEF DESCRIPTION OF THE DRAWINGS

In the following the invention will be described in greater detail by means of a preferred lighting fixture arrangement with reference to the accompanying drawings, in which
Figure 1 is a perspective view showing a lighting fixture of the invention, and
Figure 2 shows the lighting fixture of Figure 1 in cross-section.

### DETAILED DESCRIPTION OF THE INVENTION

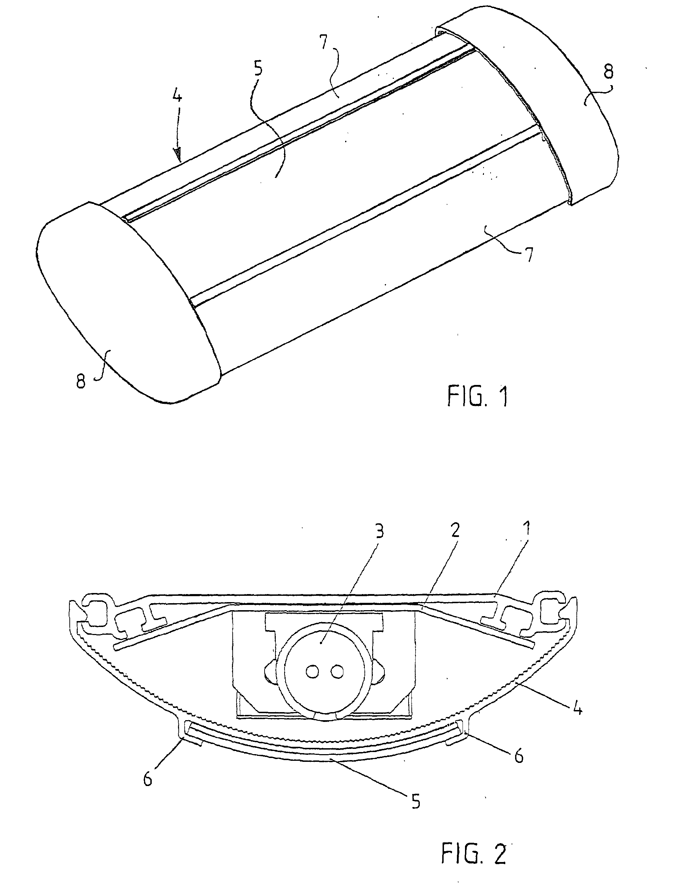

With reference to the drawing, and to Figure 2 in particular, a lighting fixture of the invention presented therein comprises a housing 1, a reflector 2 integrated thereto, a light source 3 above the reflector, which is typically a fluorescent lamp, and a cover 4 conventionally made of plastic providing a dustproof cover and scattering light fastened to the housing 1 in such a manner that the housing 1 and the cover 4 close the light source 3 inside themselves. All this describes a lighting structure known as such in the art.

In accordance with the invention, an at least mainly opaque part 5 is fastened at the light source 3 (so that the light source 3 itself is not visible on the outside) onto the outer surface in the middle of the cover 4 of the elongated lighting fixture in order to prevent the glare of light. This part can also be referred to as a glare shield. The glare shield 5 is typically made of metal, and can be painted on the outside or coated with a textile, for example. The glare shield 5 is fastened using a particular kind of longitudinal claws 6, which form a part of the cover 4. The glare shield can be made of a completely opaque material or of a partly light-permeable material. Thus, the amount of direct light and the prevention of glare can be affected. The luminosity of the lighting fixture can be maximized regardless of the glare shield 5, as the surface approaching the light source 3 reflects light. This can be implemented using for instance a polished aluminium surface.

The cover 4 and the material thereof are selected so that the glare shield 5 can be easily fastened thereto by bending the cover 4 and by snapping the glare shield 5 into place. The material used is generally plastic, as mentioned above, but other materials can also be used, such as a plate made of metal including the required openings for letting the light out.

As shown in Figure 1 in particular, the glare shield 5 is fastened into the middle of the cover 4 in such a manner that longitudinal outlet openings 7 are left for the light at the sides of the cover 4. The relation between the outlet openings 7 and the areas of the glare shields 5 can be changed in accordance with the lighting level requirements. Figure 1 further shows end sets 8 closing the ends of the lighting fixture of the invention. The lighting fixture of the invention forms a compact structure where all required structural elements are integrated into a single whole.

The invention has above been described by means of a single preferred embodiment. However, it is obvious for those skilled in the art that the details of the invention can be implemented in various ways within the scope of the appended claims. Therefore, the glare shield can alternatively be fastened using for instance the grooves in the cover, screws or a bonding agent etc. The glare shield can, if desired, also be fastened inside the cover.

## Claims

1. A lighting fixture arrangement comprising a housing (1), a light source (3), a light-permeable shield part (4) scattering light and an at least mainly opaque part (5) placed at the light source (3) in the shield part (4), **characterized in that** the shield part (4) is made of flexible material, and that the opaque part (5) is fastened onto the outer surface of the shield part (4) using fasteners (6) that form a uniform structure with the shield part.

2. An arrangement as claimed in claim 1, **characterized in that** the fasteners (6) resemble claws formed on the shield part.

3. An arrangement as claimed in claim 1, **characterized in that** the fasteners (6) are grooves formed on the shield part.

4. An arrangement as claimed in any one of the preceding claims, **characterized in that** the surface of the opaque part (5) approaching the light source (3) reflects light.

5. An arrangement as claimed in any one of the preceding claims, whereby the lighting fixture including the shield parts (4) is an elongated whole, **characterized in that** the opaque part (5) is fastened into the middle of the shield part, whereby longitudinal outlet openings (7) are left for the light at the sides of the shield part (4).
